# EUROPÄISCHE PATENTSCHRIFT

(11) **EP 3 403 404 B1**
(45) Veröffentlichungstag und Bekanntmachung des Hinweises auf die Patenterteilung: **30.11.2022**
(21) Anmeldenummer: 16819482.7
(22) Anmeldetag: 13.12.2016
(51) Int. Cl.: H04N 13/243, H04N 5/225, H04N 5/232, H04N 5/247, B60R 11/04

(54) **STEREOBILDERFASSUNGSSYSTEM**
STEREOSCOPIC IMAGE CAPTURE SYSTEM
SYSTEME DE CAPTURE D'IMAGES STEREOSCOPIQUES

(30) Priorität: 15.01.2016 DE 102016100656
(43) Veröffentlichungstag der Anmeldung: 21.11.2018
(73) Patentinhaber: Fachhochschule Nordwestschweiz FHNW, 4132 Muttenz (CH)
(72) Erfinder: NEBIKER, Stephan, 4410 Liestal (CH)
(74) Vertreter: Müller Hoffmann & Partner
(86) Internationale Anmeldenummer: PCT/EP2016/080836
(87) Internationale Veröffentlichungsnummer: WO 2017/121563

(56) Entgegenhaltungen:
- US-A1- 2011 164 108
- US-A1- 2012 105 574
- US-B1- 7 126 630
- US-B1- 9 185 391

## Beschreibung

Die vorliegende Erfindung betrifft ein Stereobilderfassungssystem mit zwei gleichartigen Panoramabilderfassungseinheiten, wobei jede Panoramabilderfassungseinheit mehrere erste Bilderfassungssensoren mit zugehörigen ersten optischen Elementen und einen zweiten Bilderfassungssensor mit zugehörigen zweiten optischen Elementen umfasst, wobei durch den zweiten Bildsensor eine zweite Abbildungsebene festgelegt ist und durch die ersten Bildsensoren jeweilige erste Abbildungsebenen festgelegt sind, derart dass die zweite Abbildungsebene orthogonal zu allen ersten Abbildungsebenen ausgerichtet ist und dass die ersten Abbildungsebenen geneigt zueinander ausgerichtet sind.

Für die Erfassung von Stereobildern in einer Panoramaansicht, insbesondere einer Panoramarundsicht von 360° ist es bekannt, zwei Kameraeinheiten mit jeweils mehreren Bildsensoren auf einer vertikalen Basis zu befestigen, wobei die Kameraeinheiten in einem Abstand von etwa einem Meter übereinander angeordnet sind. Die Bildsensoren der beiden Kameraeinheiten sind dabei paarweise gleich ausgerichtet, so dass ihre jeweiligen Abbildungsebenen in einer gemeinsamen Ebene liegen. Derartige Stereobilderfassungssysteme mit vertikal übereinander angeordneten Kameraeinheiten sind beispielsweise bekannt aus der US 7,126,630 B1 und aus Projekten wie Mars Rover von NASA JPL. Weitere bekannte Anwendungen werden durch Earthmine (www.earthmine.com) bzw. Here Maps (www.here.com) angeboten. Ferner ist auch ein Stereo-Panorama-Produkt (Open Source) mit vertikaler Stereobasis Elphel eyesis-4pi bekannt (www3.elphel.com/eyesis-4pi).

Ein Bilderfassungssystem mit Panoramabilderfassungseinheiten ohne zweiten Bildsensor ist aus der US 9,185,391 B1 bekannt.

Es hat sich allerdings gezeigt, dass die Anordnung von Kameraeinheiten auf vertikalen Trägern problematisch ist hinsichtlich der Stabilität des Systems im bewegten Zustand aufgrund der wirkenden Hebelkräfte, insbesondere weil die wirkende Masse (Gewicht Kameraeinheiten) sehr weit weg von einem unteren Befestigungspunkt des vertikalen Trägers liegen. Diesen Kräften kann durch die Verwendung von Abspannseilen oder Streben entgegengewirkt werden, was die Konstruktion aber sehr aufwändig macht.

Ferner gibt es datenschutzrechtliche Bedenken hinsichtlich der Anordnung von Kameras auf einer Höhe oberhalb von 2 Metern über dem Untergrund, da durch eine solche Anordnung von einer erhöhten Position aus in private Bereiche Einsicht erlangt werden kann. Es ist eine übliche datenschutzrechtliche Forderung, dass die Kamerasysteme nicht höher angeordnet werden dürfen als eine (große) Person üblicherweise ihre Augen hat, so dass durch die Kamerasysteme möglichst nur Blickwinkel erfasst werden können, die auch eine zufälligerweise vorbeigehende Person sehen kann.

Es ist daher Aufgabe der Erfindung ein Stereobilderfassungssystem bereitzustellen, das die obigen Nachteile verringert oder sogar vermeidet.

Diese Aufgabe wird gelöst durch das Stereobilderfassungssystem gemäß Anspruch 1.

Es wird vorgeschlagen, dass die beiden Panoramabilderfassungseinheiten an verschiedenen Endabschnitten einer gemeinsamen Trägerstruktur angeordnet sind, wobei die Endabschnitte und die Panoramabilderfassungseinheiten entlang, insbesondere auf einer Verbindungsachse angeordnet sind, derart dass die Panoramabilderfassungseinheiten so ausgerichtet sind, dass die beiden zweiten Abbildungsebenen parallel zueinander liegen und dass mittels der jeweiligen zweiten optischen Elemente Umgebungsabbildungen aus diametral unterschiedlichen Richtungen durch den jeweiligen zweiten Bilderfassungssensor erfassbar sind.

Bei dieser vorgeschlagenen Anordnung der Panoramabilderfassungseinheiten kann die Trägerstruktur so ausgebildet werden, dass die beiden Panoramabilderfassungseinheiten insbesondere in horizontaler Richtung so angeordnet werden können, dass die Umgebungsabbildungen mittels der ersten Bilderfassungssensoren auf unterschiedlichen Seiten liegen bezogen auf einen Mittelpunkt zwischen den beiden Panoramaerfassungseinheiten. Beispielsweise kann ein Umgebungsbild nach vorne und eines nach hinten, oder eines rechts und das andere nach links erfasst werden.

Die beiden Panoramabilderfassungseinheiten können an verschiedenen Endabschnitten einer gemeinsamen Trägerstruktur angeordnet sein, wobei die Endabschnitte und die Panoramabilderfassungseinheiten entlang, insbesondere auf einer Verbindungsachse angeordnet sind, derart dass die Endabschnitte zwischen den beiden Panoramabilderfassungseinheiten liegen und die beiden Panoramabilderfassungseinheiten das jeweils äußerste Element entlang, insbesondere auf der Verbindungsachse bilden, wobei jeweilige erste Abbildungsebenen der beiden Panoramabilderfassungseinheiten paarweise gleich ausgerichtet sind und wobei die ersten Abbildungsebenen Tangentialebenen zu einem Zylinder bilden, dessen Zylinderachse parallel zur Verbindungsachse verläuft oder die Verbindungsachse ist.

Auch bei einem solchen Aufbau des Systems kann die Trägerstruktur so ausgebildet werden, dass die beiden Panoramabilderfassungseinheiten an diametralen Enden der gedachten Verbindungsachse liegen, wobei die Verbindungsachse vorzugsweise horizontal bzw. im Wesentlichen parallel zu einem die Tragkonstruktion tragenden Untergrund ausgerichtet ist. Durch die paarweise gleich ausgerichteten ersten Abbildungsebenen der beiden Panoramabilderfassungseinheiten und die zueinander geneigte Anordnung der ersten Abbildungsebenen, können somit Stereobildpaare erfasst werden, die einen Bereich von 360° um die Verbindungsachse bzw. um die Zylinderachse abdecken. Benachbarte erste Abbildungsebenen bzw. deren Schwerpunkt (Schnittpunkt einer jeweiligen optischen Achse mit der Abbildungsebene) liegen dabei immer auf unterschiedlichen Höhen bezogen auf den das System tragenden Untergrund bzw. auf ein Element der Trägerstruktur.

Es ist bevorzugt, dass die Panoramabilderfassungseinheiten so an der Trägerstruktur angeordnet sind, dass die beiden zweiten Abbildungsebenen die Verbindungsachse orthogonal schneiden. Die Verbindungsachse kann dabei insbesondere eine im Wesentlichen horizontal verlaufende Achse sein. Damit bei einer solchen Anordnung Stereobildpaare mittels der ersten Bilderfassungssensoren erfasst werden können, wird vorgeschlagen, dass die Panoramabilderfassungseinheiten so zueinander ausgerichtet sind, dass jeweilige erste Abbildungsebenen der beiden Panoramabilderfassungseinheiten paarweise gleich ausgerichtet sind bezogen auf eine Verbindungsebene, welche die Verbindungsachse enthält und orthogonal zur zweiten Abbildungsebene liegt.

Dabei ist es bevorzugt, dass die Panoramabilderfassungseinheiten jeweils vier oder mehr erste Bilderfassungssensoren umfassen, wobei die vier oder mehr ersten Abbildungsebenen von jeder Panoramabilderfassungseinheit entlang den Seiten eines insbesondere regelmäßigen Vielecks angeordnet sind, das orthogonal zur Verbindungsachse liegt.

Bei jeder Panoramabilderfassungseinheit können jeweilige erste optische Achsen der ersten optischen Elemente bezogen auf eine hierzu orthogonale zweite optische Achse des zweiten optischen Elements in unterschiedliche radiale Richtungen zeigen, wobei zwei benachbarte erste optische Achsen einen Winkel einschließen im Bereich von 30° bis 90°, wobei der Winkel vorzugsweise 60° oder 72° beträgt.

Vereinfacht ausgedrückt bilden somit die Abbildungsebenen Mantelflächen eines Zylinders mit der Grundfläche eines Vielecks, wobei die Zylinderachse durch die zweite optische Achse bzw. die Verbindungsachse gebildet wird.

Vorzugsweise enthält die Verbindungsachse die zweiten optischen Achsen der zweiten optischen Elemente der beiden Panoramabilderfassungseinheiten. Hierdurch ist gewährleistet, dass die beiden Panoramabilderfassungseinheiten im Prinzip auf einer gemeinsamen optischen Achse liegen.

Erfindungsgemäß sind die Panoramabilderfassungseinheiten entlang der Verbindungsachse in einem ersten Abstand voneinander angeordnet sein. Die Anordnung in einem Abstand von etwa 0,8 bis 1,5 Metern ermöglicht eine optimale Erfassung von Stereobildpaaren mittels der entsprechend auch im Abstand zueinander angeordneten ersten Abbildungsebenen, die wie bereits oben erwähnt paarweise gleich ausgerichtet sind bzw. paarweise in einer gemeinsamen Ebene liegen.

Weiterbildend wird vorgeschlagen, dass zusätzlich zu den beiden Panoramabilderfassungseinheiten wenigstens zwei gesonderte Bilderfassungseinheiten mit einem jeweiligen dritten Bilderfassungssensor und zugehörigen dritten optischen Elementen vorgesehen sind, wobei durch die dritten Bildsensoren eine jeweilige dritte Abbildungsebene festgelegt ist. Durch diese gesonderten Bilderfassungseinheiten können mittels Stereobildern insbesondere auch noch weitere Umgebungsbereiche erfasst werden, die nicht durch die Panoramabilderfassungseinheiten mit Stereobildpaaren erfasst werden können.

Hierzu wird weiter vorgeschlagen, dass die dritten Abbildungsebenen von zwei Bilderfassungseinheiten parallel zueinander ausgerichtet sind, und dass die Bilderfassungseinheiten in einem Abstand zueinander angeordnet sind, der orthogonal zur Richtung der Verbindungsachse der beiden Panoramabilderfassungseinheiten verläuft.

Jeder der beiden Panoramabilderfassungseinheiten können zwei gesonderte Bilderfassungseinheiten zugeordnet sein, derart dass jeweils zwei gesonderte Bilderfassungseinheiten eine im Wesentlichen gleiche Ausrichtung ihrer dritten optischen Achsen aufweisen, wie die zweite optische Achse der zugeordneten Panoramabilderfassungseinheit. Geht man davon aus, dass die Verbindungsachse bzw. die zweiten optischen Achsen in einer Vertikalebene liegt bzw. liegen und in dieser Vertikalebene im Wesentlichen horizontal verlaufen, können die dritten optischen Achsen der gesonderten Bilderfassungseinheiten ebenfalls in Vertikalebenen liegen, die parallel zur Vertikalebene der Verbindungsachse liegen, wobei die dritten optischen Achsen zur im Wesentlichen horizontalen Verbindungsachse bzw. zu den zweiten optischen Achsen parallel sein können oder gleich geneigt sein können, beispielsweise um einen Winkel bis etwa 10°.

Es ist bevorzugt, dass die Trägerstruktur durch mehrere strebenartige Trägerelemente gebildet ist und dazu eingerichtet ist, die Panoramabilderfassungseinheiten auf einem beweglichen oder unbeweglichen Objekt anzuordnen, insbesondere zu befestigen. Dies ermöglicht eine stabile relative Positionierung der Panoramabilderfassungseinheiten zueinander unabhängig davon, auf welcher Plattform bzw. auf welchem Objekt das Stereobilderfassungssystem eingesetzt werden soll. Die Trägerstruktur kann beispielsweise aus Leichtmetall, insbesondere profilierten Aluminiumträgern, hergestellt sein, so dass eine ausreichende Steifigkeit und Maßhaltigkeit erreicht werden kann.

An der Trägerstruktur können die gesonderten Bilderfassungseinheiten ebenfalls befestigbar oder befestigt sein.

Das Stereobilderfassungssystem kann auch wenigstens eine Computereinheit mit einer Anzeigeeinheit umfassen, die dazu eingerichtet sind, die Panoramabilderfassungseinheiten oder/und die gesonderten Bilderfassungseinheiten anzusteuern. Die Computereinheit kann beispielsweise eine tragbarer Computer (Notebook) oder ein Tabletcomputer sein, der über entsprechende drahtlose oder drahtgebundene Verbindungen mit den Panoramabilderfassungseinheiten oder/und den gesonderten Bilderfassungseinheiten gekoppelt ist.

Um eine Georeferenzierung der Bilddaten zu ermöglichen wird ferner vorgeschlagen, dass das Stereobilderfassungssystem wenigstens einen Empfänger umfasst, der dazu eingerichtet ist, Signale von Navigationssatelliten zu empfangen, und eine Navigationsverarbeitungseinheit, die dazu eingerichtet ist, diese Signale zu verarbeiten, wobei die Navigationsverarbeitungseinheit vorzugsweise Teil der Computereinheit ist, und eine Inertialmesseinheit zur Richtungsbestimmung oder/und Orientierungsbestimmung, so dass mittels der Navigationsdaten und der Daten der Inertialmesseinheit eine Position und Orientierung des Stereobilderfassungssystems bestimmt werden kann.

Als Empfänger kommt insbesondere ein GNSS-Empfänger in Betracht, der zusammen mit der Inertialmesseinheit ein Trägheitsnavigationssystem bildet. Die Inertialmesseinheit dient bevorzugt der Orientierungs- bzw. Richtungsbestimmung, kann aber auch für die Positionsbestimmung zur Stützung der GNSS-Positionsbestimmung eingesetzt werden.

Durch den Einsatz von mehreren Bilderfassungseinheiten ist es aber mit dem vorliegenden System und unter Verwendung von bildbasierten Georeferenzierungsalgorithmen auch denkbar, einen autonomen Betrieb ohne Trägheitsnavigationssystem durchzuführen.

Schließlich betrifft die Erfindung auch ein Fahrzeug, insbesondere Straßenfahrzeug oder Schienenfahrzeug, wobei am Fahrzeug, insbesondere auf einem Fahrzeugdach oder einer mit dem Fahrzeug verbundenen Plattform, ein Stereobilderfassungssystem mit wenigstens einem der oben beschriebenen Merkmale befestigt ist.

Die Erfindung wird nachfolgend unter Bezugnahme auf die anliegenden Figuren beispielhaft und nicht einschränkend beschrieben.
Fig. 1 zeigt in einer vereinfachten schematischen Perspektivdarstellung ein Stereobilderfassungssystem mit zwei Panoramabilderfassungseinheiten an einer gemeinsamen Trägerstruktur
Fig. 2 zeigt das Stereobilderfassungssystem der Fig. 1 ergänzt mit weiteren Bilderfassungseinheiten.
Fig. 3 zeigt in einer vereinfachten schematischen Perspektivdarstellung ein modifiziertes Stereobilderfassungssystem mit einer veränderten Trägerstruktur.
Fig. 4 zeigt eine schematische Schnittdarstellung eines Straßenzuges und einem darin angeordneten Stereobilderfassungssystem.
Fig. 5 zeigt in einer vereinfachten Weise Bilder, die mittels der weiteren Bilderfassungseinheiten erfasst werden.
Fig. 6 zeigt in einer vereinfachten Weise Bilder, die mittels der Panoramabilderfassungseinheiten erfasst werden.

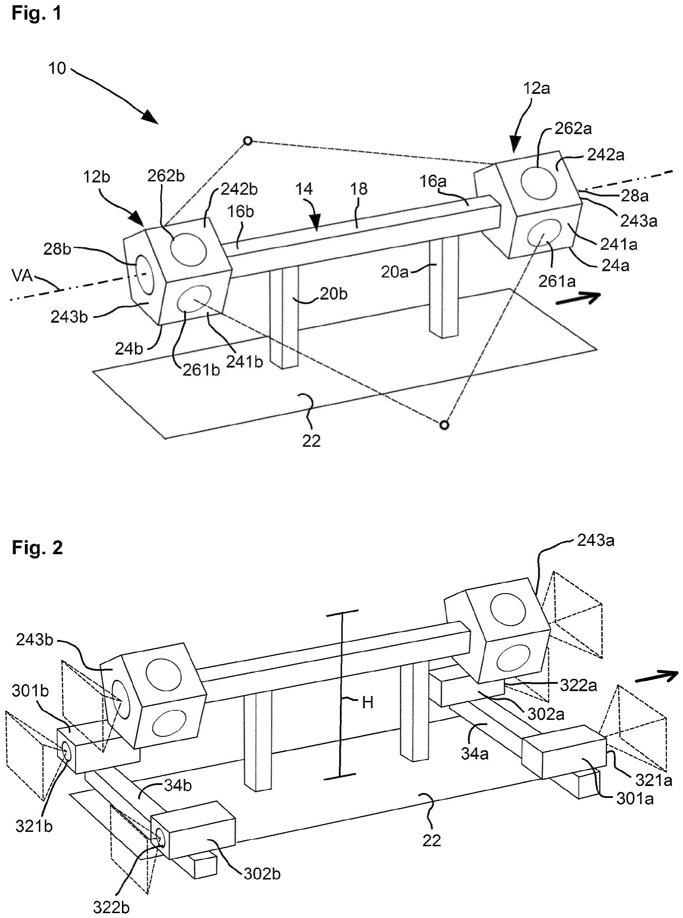

Fig. 1 zeigt in einer schematischen und vereinfachten Perspektivdarstellung das Grundprinzip eines Stereobilderfassungssystems 10. Das Stereobilderfassungssystem 10 umfasst zwei gleichartige Panoramabilderfassungseinheiten 12a und 12b, die an einer gemeinsamen Trägerstruktur 14 befestigt sind. Dabei sind die Panoramabilderfassungseinheiten 12a, 12b an diametralen Endabschnitten 16a, 16b der Trägerstruktur 14 angebracht. In dem vorliegenden Beispiel sind die Endabschnitte 16a, 16b Endstücke eines durchgehenden Trägers 18. Der Träger 18 ist auf zwei Stützen 20a, 20b gelagert bzw. befestigt. Die beiden Stützen 20a, 20b können mit einem Basiselement 22 verbunden sein, wobei das Basiselement 22 hier vereinfacht und nicht einschränkend als eine Art Platte dargestellt ist. Das Basiselement 22 kann auch durch weitere Träger gebildete rahmenartige oder fachwerkartige Konstruktion aufweisen.

Die beiden Panoramabilderfassungseinheiten 12a, 12b umfassen ein Gehäuse 24a bzw. 24b und weisen jeweils mehrere in der Darstellung nicht sichtbare erste Bilderfassungssensoren auf mit zugehörigen ersten optischen Elementen 261a, 262a bzw. 261b, 262b. Die ersten optischen Elemente 261a, 262a bzw. 261b, 262b sind in der Fig. 1 als Kreise dargestellt und können beispielsweise eine oder mehrere Linsen eines Objektivs oder/und eine Blende des Objektivs oder sonstige optische Komponenten umfassen. Ferner weisen die Panoramabilderfassungseinheiten 12a, 12b ebenfalls nicht sichtbare zweite Bilderfassungssensoren auf mit zugehörigen zweiten optischen Elementen 28a, 28b.

Die ersten und zweiten Bilderfassungssensoren weisen eine jeweilige erste Abbildungsebene und eine jeweilige zweite Abbildungsebene auf. Diese Abbildungsebenen sind zwar in der Fig. 1 nicht ersichtlich, aber ihre Lage im Raum wird beispielhaft durch die jeweiligen schematisch dargestellten Gehäuseflächen 241a, 242a, 243a bzw. 241b, 242b, 243b repräsentiert, welche jeweilige optische Elemente 261a, 262a bzw. 261b, 262b bzw. 28a, 28b enthalten. Um die Beschreibung nachfolgend zu vereinfachen, werden die Bezugszeichen 241a, 242a, 243a bzw. 241b, 242b, 243b, welche für die Gehäuseflächen eingeführt worden sind, auch stellvertretend für die ersten Abbildungsebenen 241a, 242a, bzw. 241b, 242b und die zweiten Abbildungsebenen 243a, 243b verwendet.

Wie aus der Darstellung ersichtlich, sind die ersten Abbildungsebenen 241a, 242a, 241b, 242b alle orthogonal zu der jeweiligen zweiten Abbildungsebene, 243a bzw. 243b. Ferner sind die ersten Abbildungsebenen 241a, 242a, 241b, 242b zueinander geneigt ausgeführt Gemäß dem dargestellten Beispiel weisen die Panoramabilderfassungseinheiten 12a, 12b jeweils fünf erste Bilderfassungssensoren mit jeweiligen ersten optischen Elementen (sichtbar sind in der Fig. 1 nur deren zwei) und jeweils einen zweiten Bilderfassungssensor mit jeweiligen zweiten optischen Elementen auf.

Die beiden Panoramabilderfassungseinheiten 12a und 12b sind entlang oder auf einer gedachten Verbindungsachse VA angeordnet, wobei die Panoramabilderfassungseinheiten 12a, 12b so ausgerichtet sind, dass die beiden zweiten Abbildungsebenen 243a, 243b parallel zueinander liegen und dass mittels der jeweiligen zweiten optischen Elemente 28a, 28b Umgebungsabbildungen aus diametral unterschiedlichen Richtungen durch den jeweiligen zweiten Bilderfassungssensor erfassbar sind. Für die Fig. 1 wird angenommen, dass die Verbindungsachse VA die optischen Achsen der beiden zweiten optischen Elemente 28a, 28b enthält, d.h. diese optischen Achsen liegen auf der Verbindungsachse VA. Die zweiten Abbildungsebenen 243a, 243b sind zur Verbindungsachse VA orthogonal ausgerichtet.

Aus der Fig. 1 ist ferner ersichtlich, dass die Endabschnitte 16a, 16b des Trägers 18 zwischen den beiden Panoramabilderfassungseinheiten 12a, 12b liegen. Die beiden Panoramabilderfassungseinheiten 12a, 12b bilden somit das jeweils äußerste Element entlang oder auf der Verbindungsachse VA. Jeweilige erste Abbildungsebenen der beiden Panoramabilderfassungseinheiten 12a, 12b sind paarweise gleich ausgerichtet, d.h. die Abbildungsebenen 241a und 241b sowie 242a und 242b bilden jeweils ein Paar, das gleich ausgerichtet ist. Die ersten Abbildungsebenen 241a, 242a, 241b, 242b bilden Tangentialebenen zu einem gedachten Zylinder dessen Zylinderachse parallel zur Verbindungsachse VA verläuft oder die Verbindungsachse VA ist.

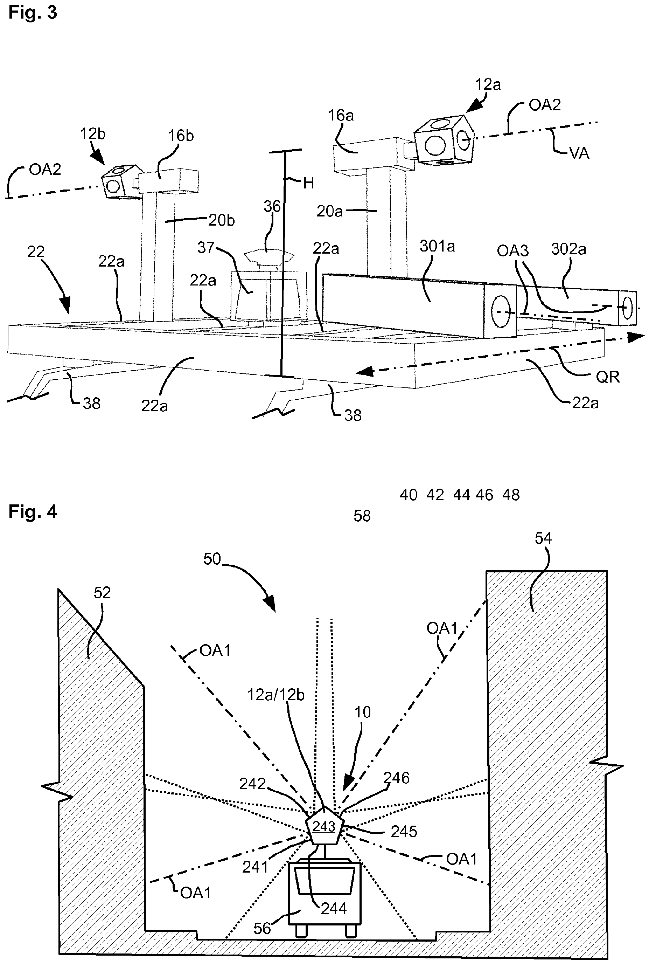

Durch die paarweise gleiche Ausrichtung im Raum von jeweiligen ersten Abbildungsebenen 241a, 241b und 242a, 242b können mittels der beiden Panoramabilderfassungseinheiten 12a, 12b Stereobildpaare der Umgebung erfasst werden. Diese Stereobildpaare können dann beispielsweise dazu verwendet werden, mittels Bildverarbeitungsmethoden dreidimensionale Modelle der Umgebung zu erstellen bzw. darzustellen. Mittels der Panoramabilderfassungseinheiten 12a, 12b können also jeweils fünf Stereobildpaare erfasst werden. Dies wird später noch genauer beschrieben unter Bezugnahme auf die Figur 4.

Fig. 2 zeigt das Stereobilderfassungssystem 10 der Fig. 1 mit zusätzlichen Bilderfassungseinheiten 301a, 302a, 301b, 302b. Auch diese zusätzlichen Bilderfassungseinheiten 301a, 302a, 301b, 302b weisen einen jeweiligen nicht sichtbaren dritten Bilderfassungssensor auf und zugehörige dritte optische Elemente 321a, 322a, 321b, 322b auf. Die zusätzlichen Bilderfassungseinheiten 301a, 302a, 301b, 302b sind an einem jeweiligen weiteren Träger 34a, 34b angebracht, der ebenfalls mit dem Basiselement 22 verbunden ist. Mittels der Bilderfassungseinheiten 301a und 302a bzw. 301b, 302b können ebenfalls Stereobildpaare erfasst werden. Die jeweiligen dritten Abbildungsebenen der Bilderfassungseinheiten 301a, 302a, 301b, 302b sind parallel zueinander ausgerichtet. Sie können auch parallel zu den zweiten Abbildungsebenen 243a, 243b sein.

Fig. 3 zeigt eine bevorzugte Ausführungsform eines Stereobilderfassungssystems 10 in einer vereinfachten perspektivischen Darstellung. Auch in dieser Darstellung sind die Panoramabilderfassungseinheiten 12a, 12b ersichtlich, die an unterschiedlichen Endabschnitten 16a, 16b der gemeinsamen Trägerstruktur angebracht sind. Die Endabschnitte 16a, 16b sind in diesem Beispiel voneinander getrennt, d.h. sie sind nicht diametrale Endstücke eines durchgehenden Trägers (wie in Fig. 1). Die Endabschnitte 16a, 16b sind auf einer jeweiligen Stütze 20a, 20b angebracht. Diese Stützen 20a, 20b sind mit dem Basiselement 22 verbunden, das hier eine rahmenartige Konstruktion aufweist, die aus mehreren Trägern 22a gebildet ist. Jede Stütze 20a, 20b ist auf einem der Träger 22 angebracht. An dem Basiselement 22 bzw. einem der Träger 22a sind auch zwei zusätzliche Bilderfassungseinheiten 301a, 302a angebracht.

Auf dem Basiselement 22 ist ferner ein Empfänger 36 angeordnet, der dazu eingerichtet ist, Signale von Navigationssatelliten zu empfangen, beispielsweise GNSS-Signale. Die stellvertretend für den Empfänger dargestellte Antenne 36 ist hier zwischen den beiden Panoramabilderfassungseinheiten 12a, 12b bzw. zwischen den Stützen 20a, 20b angeordnet. Unterhalb der Antenne 36 ist bevorzugt eine Inertialmesseinheit 37 angeordnet. Vorzugsweise hat der Empfänger 36 oder/und die Inertialmesseinheit 37 von den beiden Panoramabilderfassungseinheiten 12a, 12b den gleichen Abstand. Der Abstand soll dabei insbesondere minimiert sein. Damit soll erreicht werden, dass die Hebelarme zwischen dem Empfänger (GNSS-Antenne) 36, der Inertialmesseinheit 37 und den Bilderfassungseinheiten möglichst kurz gehalten wird und gleichzeitig möglichst geringe Satellitenabschattungen auftreten. Der Empfänger 36 liegt bezogen auf die Richtung der gedachten Verbindungsachse VA in der Mitte zwischen den Stützen 20a, 20b. Bevorzugt liegt der Empfänger auch in einer Querrichtung QR orthogonal zur Verbindungsachse VA, in der Mitte zwischen den beiden weiteren Bilderfassungseinheiten 301a, 301b. Beim vorliegenden Beispiel liegt der Empfänger 36 also etwa im Schwerpunkt einer durch die Rahmenkonstruktion gebildeten Fläche. Da der Empfänger 36 die (geografische) Position des gesamten Stereobilderfassungssystems 10 bestimmt ist es vorteilhaft, wenn die verschiedenen Bilderfassungseinheiten, die Stereobildpaare erfassen, zu diesem Empfänger 36 paarweise einen minimierten Abstand aufweisen. Dies vereinfacht die Georeferenzierung der Stereobildpaare und ggf. auch von Bildinhalten bzw. Pixeln der erfassten Bilder. Die Minimierung der Abstände führt insbesondere auch zu einer verbesserten Stabilität der Trägerplattform, wobei eine erhöhte Stabilität auch zu einer genaueren Orientierungsbestimmung führt.

Die beiden Panoramabilderfassungseinheiten 12a, 12b weisen eine gemeinsame optische Achse OA2 auf, die im Beispiel mit der gedachten Verbindungsachse VA zusammenfällt. Die beiden weiteren Bilderfassungseinheiten 301a, 301b weisen eine jeweilige optische Achse OA3 auf. Wie aus der Fig. 3 ersichtlich ist, liegen die optischen Achsen OA2 und OA3 auf parallelen vertikalen Ebenen, welche die jeweilige zweite bzw. dritte Abbildungsebene orthogonal schneidet. Projiziert man die optischen Achsen OA2 und OA3 auf eine gemeinsame vertikale Ebene, liegen die beiden optischen Achsen OA3 aufeinander und sind zur optischen Achse OA2 leicht geneigt. Der zwischen den optischen Achsen OA2 und OA3 gebildete Winkel kann bis zu 10° betragen. Im vorliegenden Beispiel liegt er bei etwa 0,5° bis 5°.

In der Fig. 3 ist ferner eine mit dem Basiselement 22 bzw. den rahmenartig angeordneten Trägern 22a verbundene Befestigungseinheit 38 ersichtlich. Diese Befestigungseinheit 38 kann beispielsweise dazu eingerichtet sein, auf einem Dach eines Fahrzeugs befestigt zu werden, so dass die Stereobilderfassungseinheit 10 auf dem Dach des Fahrzeugs mitgeführt werden kann und entlang von Straßen die Umgebung mittels Stereobildpaaren erfasst werden kann. Die Anbringung des Basiselements 22 mittels einer Befestigungseinheit 38 auf einem Fahrzeugdach ist eine nicht einschränkende Möglichkeit. Es ist auch denkbar dass das Basiselement auf einer Art Plattform bereitgestellt wird, die mit einem Fahrzeug verbunden ist, beispielsweise könnte eine solche Plattform Teil eines Schienenfahrzeugs sein.

Wie sich aus der Zusammenschau der Figuren 1 bis 3 ergibt, weist das Stereobilderfassungssystem 10 eine geringe Bauhöhe H (Fig. 2 und 3) auf. Die Bauhöhe H liegt inklusive des Basiselements 22, aber ohne eine Befestigungseinheit 38, bei 40 bis 80 cm, bevorzugt bei etwa 50 bis 60 cm. Die Panoramabilderfassungseinheiten 12a, 12b sind entlang der im Wesentlichen horizontal liegenden gedachten Verbindungsachse VA angeordnet. Da die Panoramabilderfassungseinheiten 12a, 12b nicht in vertikaler Richtung übereinander angeordnet sind, kann beispielsweise gewährleistet werden, dass keine der Panoramabilderfassungseinheiten 12a, 12b auf einer Höhe angeordnet wird, die größer als 2 Meter über dem Untergrund ist. Die Stereobildpaare werden durch die beiden Panoramabilderfassungseinheiten 12a, 12b um die optische Achse OA2 bzw. die gedachte Verbindungsachse VA2 herum, sozusagen in Umfangsrichtung um einen gedachten Zylinder mit der Zylinderachse gleich der Verbindungsachse VA, erfasst.

Die erwähnten (Panorama)Bilderfassungseinheiten können auch als Kameras bzw. Kamerasystem bezeichnet werden. Als Panoramabilderfassungseinheiten 12a, 12b können beispielsweise Kameras vom Typ LadyBug der Firma Pointgrey eingesetzt werden, wobei die Anbringung dieser Kameras im vorgeschlagenen Stereobilderfassungssystem um 90° (nach vorne bzw. nach hinten oder nah links bzw. rechts) gedreht ist verglichen mit der herkömmlichen Verwendung solcher Kameratypen.

Fig. 4 zeigt eine stark vereinfachte schematische Schnittdarstellung durch einen Straßenzug 50 mit Häusern 52, 54 und ein Fahrzeug 56 mit einem stilisiert dargestellten Stereobilderfassungssystem 10 auf seinem Dach. Stilisiert dargestellt ist eine Fünfeck, das die Panoramabilderfassungseinheiten 12a, 12b repräsentiert. Die Seiten des Fünfecks sind mit den Bezugszeichen 241, 242, 244, 245 und 246 bezeichnet und repräsentieren die jeweiligen ersten Abbildungsebenen von zugehörigen ersten Bildsensoren. Mit 243 ist die Abbildungsebene des zweiten Bildsensors bezeichnet, die parallel zur bzw. in der Zeichnungsebene liegt.

Für die Abbildungsebenen 241, 242, 244, 245, 246 sind jeweilige optische Achsen OA1 strichpunktiert eingezeichnet. Ferner sind durch punktierte Linien die jeweiligen Öffnungswinkel der optischen Elemente illustriert.

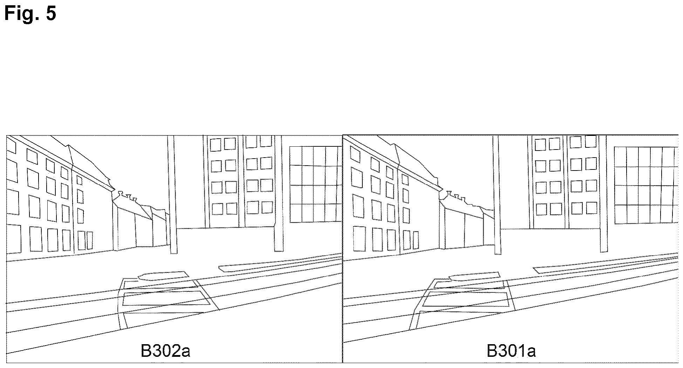

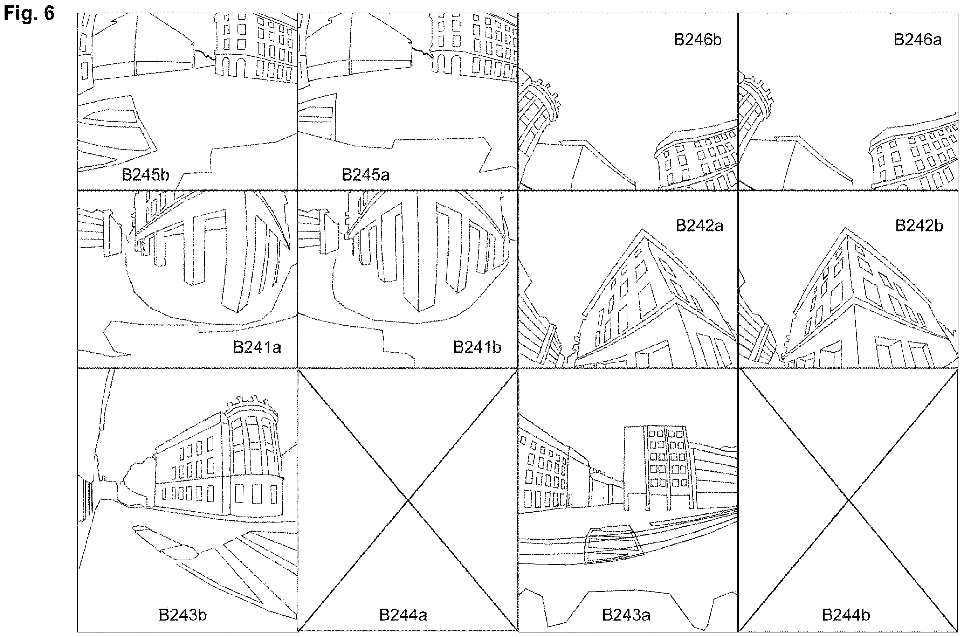

Wird ein Stereobilderfassungssystem 10 gemäß der Ausführungsform der Fig. 3 beispielsweise auf einem Fahrzeugdach befestigt, etwa unter Verwendung eines herkömmlichen Dachträgers, können die dritten Bilderfassungseinheiten 301a und 302a in Vorwärtsfahrrichtung nach vorne gerichtet sein. Entsprechend ist die Panoramabilderfassungseinheit 12a vorne und die Panoramabilderfassungseinheit 12b hinten angeordnet. Wird das Stereobilderfassungssystem nun durch einen Straßenzug 50 bewegt, können beispielhaft die in den Figuren 5 und 6 dargestellten Bilder erfasst werden.

Fig. 5 zeigt dabei die von den Bilderfassungseinheiten 301a und 302a erfassten Bilder B301a und B302a die vor dem Fahrzeug aufgenommen worden sind. Die Bilder B301a und B302a bilden ein Stereobildpaar, das zur Erfassung von dreidimensionalen Informationen verarbeitet werden kann.

Fig. 6 zeigt eine Zusammenstellung der mit den beiden Panoramabilderfassungseinheiten 12a und 12b erfassten Bilder. Die Bilder beziehen sich mit Ihrer Nummerierung auf die in Fig. 4 dargestellte Abbildungsebene (repräsentiert durch die Seiten des Fünfecks), wobei die Buchstaben a und b die Zuordnung zur jeweiligen Panoramabilderfassungseinheit 12a bzw. 12b herstellen.

Entsprechend zeigen die Bilder B243a und B243b die Sicht in Fahrtrichtung nach vorne (B243a) und nach hinten (B243b). In der darüber liegenden Bilderzeile ist die in Fahrtrichtung rechts befindliche Umgebung abgebildet, jeweils mit Blickrichtung nach schräg unten, Bilder B241a und 241b, und nach schräg oben, Bilder 242a, 242b. Hier bilden die Bildpaare B241a, B241b und B242a, B242b jeweilige Stereobildpaare. In der obersten Bilderzeile ist die in Fahrtrichtung links befindliche Umgebung abgebildet, jeweils mit Blickrichtung nach schräg unten, Bilder B245a und B245b, und nach schräg oben, Bilder B246a, B246b. Hier bilden die Bildpaare B245a, B245b und B246a, B246b jeweilige Stereobildpaare. Die mit einem Diagonalkreuz gekennzeichneten Bilder B244a, B244b in der untersten Bildzeile der Fig. 6 zeigen jeweils das Fahrzeugdach aufgrund der dem Fahrzeugdach zugewandten Abbildungsebene 244 (Fig. 4). Diese Bilder enthalten keine relevanten Informationen zur Erfassung und Auswertung der Umgebung und sind hier nur als Platzhalter dargestellt.

Aus der Zusammenschau der Fig. 5 und 6 ist auch ersichtlich, dass die dritten Bilderfassungseinheiten 301a und 301b mit ihren dritten Abbildungsebenen im Wesentlichen in die gleiche Richtung (nach vorne bezogen auf die Fahrtrichtung) ausgerichtet sind wie die Abbildungsebene 243a der Panoramabilderfassungseinheit 12a.

Wie bereits unter Bezugnahme auf die Fig. 2 erläutert worden ist, kann das Stereobilderfassungssystem 10 auch ein Paar in Fahrtrichtung nach hinten gerichtete dritte Bilderfassungseinheiten 301b und 302b aufweisen, auch wenn dies in Bezug auf die Figuren 5 und 6 nicht weiter erläutert worden ist und keine entsprechenden schematischen Bilder vorhanden sind.

Das hier vorgestellte Stereobilderfassungssystem ermöglicht es, in einer Rundumsicht von bis zu 360° jeden Objektpunkt der Umgebung in wenigstens zwei Bildern zu erfassen. Bevorzugt werden die dreidimensionalen Positionen von jedem durch das System erfassten Objektpunkt berechnet. Dabei kann entweder eine interaktive Bildauswertung zur Anwendung kommen oder es können 3D-Rekonstruktionsalgorithmen eingesetzt werden.

Ein bevorzugter Einsatz des Stereobilderfassungssystems liegt bei der Erfassung von dreidimensionalen Umgebungsmodellen. Dabei werden dreidimensionale Bildräume erzeugt, die auf Sammlungen von georeferenzierten RGB-D-Aufnahmen bzw. Bildern basieren. Bei RGB-D-Bildern werden zusätzlich zu den radiometrischen RGB-Werten auch für jeden Punkt bzw. für jedes Pixel eines Bildes Tiefenwerte (D) ermittelt. Derartige georeferenzierte RGB-D-Bilder können beispielsweise mittels eines oben vorgestellten Stereobilderfassungssystems erfasst werden. Tiefen-Informationen werden bevorzugt abgleitet unter Verwendung eines Bildmatchings.

Das hier vorgestellte Stereobilderfassungssystem umfasst auch wenigstens eine Computereinheit mit einer Anzeigeeinheit, die dazu eingerichtet sind, die Panoramabilderfassungseinheiten oder/und die gesonderten Bilderfassungseinheiten anzusteuern, um eine synchrone Bilderfassung zu gewährleisten. Die Computereinheit kann beispielsweise als mobiler Computer in einem Fahrzeug mitgeführt werden, auf dessen Fahrzeugdach das Stereobilderfassungssystem angebracht ist. Zwischen der Computereinheit und den unterschiedlichen Bilderfassungseinheiten bzw. Kameras besteht eine drahtlose oder drahtgebundene Verbindung, um entsprechende Signale auszutauschen. Der Computereinheit ist auch eine Speichereinheit zugeordnet, auf der durch die verschiedenen Bildsensoren erfasste Bildsignale als Bilddateien gespeichert werden können. Die Computereinheit ist bevorzugt auch mit dem Trägheitsnavigationssystem verbunden, das den GNSS-Navigationsempfänger und die Inertialmesseinheit aufweist, und umfasst eine entsprechende Anwendung zur Auswertung von Navigationssignalen und Inertialmessungen zur Positions- und Orientierungsbestimmung. Die beispielsweise mit einem Fahrzeug gefahrene Route wird geografisch und zeitlich erfasst, so dass beispielsweise laufend oder aber auch nach Abschluss einer Fahrt aufgrund der Zeitinformationen eine exakte Zuordnung von erfassten Bildern zu den geografischen Positionen erfolgen kann, um die Georeferenzierung der erfassten Bilder zu ermöglichen.

## Patentansprüche

1. Stereobilderfassungssystem mit zwei gleichartigen Panoramabilderfassungseinheiten (12a, 12b), wobei jede Panoramabilderfassungseinheit (12a, 12b) mehrere erste Bilderfassungssensoren mit zugehörigen ersten optischen Elementen (261a, 262a, 261b, 262b)
umfasst, wobei durch die ersten Bildsensoren jeweilige erste Abbildungsebenen (241a, 242a, 241b, 242b) festgelegt sind, derart dass die ersten Abbildungsebenen (241a, 242a, 241b, 242b) geneigt zueinander ausgerichtet sind,
wobei die beiden Panoramabilderfassungseinheiten (21a, 12b) an verschiedenen Endabschnitten (16a, 16b) einer gemeinsamen Trägerstruktur (14, 22) angeordnet sind, wobei die Endabschnitte (16a, 16b) und die Panoramabilderfassungseinheiten (12a, 12b) auf einer im Wesentlichen horizontal verlaufenden Verbindungsachse (VA) angeordnet sind,
**dadurch gekennzeichnet, dass**
jede Panoramabilderfassungseinheit (12a, 12b) einen zweiten Bilderfassungssensor mit zugehörigen zweiten optischen Elementen (28a, 28b) umfasst, wobei durch den zweiten Bildsensor eine zweite Abbildungsebene (243a, 243b) festgelegt ist, derart dass die zweite Abbildungsebene (243a, 243b) orthogonal zu allen ersten Abbildungsebenen (241a, 242a, 241 b, 242b) ausgerichtet ist, und dass die Panoramabilderfassungseinheiten (12a, 12b) so ausgerichtet sind, dass die beiden zweiten Abbildungsebenen (243a, 243b) parallel zueinander liegen und dass mittels der jeweiligen zweiten optischen Elemente (28a, 28b) Umgebungsabbildungen aus diametral unterschiedlichen Richtungen durch den jeweiligen zweiten Bilderfassungssensor erfassbar sind,
wobei die Panoramabilderfassungseinheiten (12a, 12b) entlang der Verbindungsachse (VA) in einem ersten Abstand voneinander angeordnet sind, der 0,8m bis 1,5m beträgt.

2. Stereobilderfassungssystem nach Anspruch 1, wobei die Panoramabilderfassungseinheiten (12a, 12b) so an der Trägerstruktur (14, 22) angeordnet sind, dass die beiden zweiten Abbildungsebenen (243a, 243b) die Verbindungsachse (VA) orthogonal schneiden.

3. Stereobilderfassungssystem nach Anspruch 2 wobei die Panoramabilderfassungseinheiten (12a, 12b) so zueinander ausgerichtet sind, dass jeweilige erste Abbildungsebenen (241a, 242a, 241b, 242b) der beiden Panoramabilderfassungseinheiten (12a, 12b) paarweise gleich ausgerichtet sind bezogen auf eine Verbindungsebene, welche die Verbindungsachse (VA) enthält und orthogonal zur zweiten Abbildungsebene (243a, 243b) liegt.

4. Stereobilderfassungssystem nach einem der vorhergehenden Ansprüche, wobei die beiden Panoramabilderfassungseinheiten (12a, 12b) jeweils vier oder mehr erste Bilderfassungssensoren umfassen, wobei die vier oder mehr ersten Abbildungsebenen (241a, 242a, 241b, 242b) von jeder Panoramabilderfassungseinheit (12a, 12b) entlang den Seiten eines insbesondere regelmäßigen Vielecks angeordnet sind, das orthogonal zur Verbindungsachse (VA) liegt.

5. Stereobilderfassungssystem nach einem der vorhergehenden Ansprüche, wobei bei jeder Panoramabilderfassungseinheit (12a, 12b) jeweilige erste optische Achsen (OA1) der ersten optischen Elemente (261a, 262a, 261b, 262b) bezogen auf eine hierzu orthogonale zweite optische Achse (OA2) des zweiten optischen Elements (28a, 28b) in unterschiedliche radiale Richtungen zeigen, wobei zwei benachbarte erste optische Achsen (OA1) einen Winkel einschließen im Bereich von 30° bis 90°.

6. Stereobilderfassungssystem nach einem der vorhergehenden Ansprüche, wobei die Verbindungsachse VA) die zweiten optischen Achsen (OA2) der zweiten optischen Elemente (28a, 28b) der beiden Panoramabilderfassungseinheiten (12a, 12b) enthält.

7. Stereobilderfassungssystem nach einem der vorhergehenden Ansprüche, ferner umfassend wenigstens zwei gesonderte Bilderfassungseinheiten (301a, 302a, 301b, 302b) mit einem jeweiligen dritten Bilderfassungssensor und zugehörigen dritten optischen Elementen (321a, 322a, 321b, 322b), wobei durch die dritten Bildsensoren eine jeweilige dritte Abbildungsebene festgelegt ist.

8. Stereobilderfassungssystem nach Anspruch 7, wobei die dritten Abbildungsebenen von zwei Bilderfassungseinheiten (301a, 302a, 301b, 302b) parallel zueinander ausgerichtet sind, und wobei die Bilderfassungseinheiten (301a, 302a, 301b, 302b) in einem Abstand zueinander angeordnet sind, der orthogonal zur Richtung der Verbindungsachse (VA) der beiden Panoramabilderfassungseinheiten (12a, 12b) verläuft.

9. Stereobilderfassungssystem nach Anspruch 7 oder 8, wobei jeder der beiden Panoramabilderfassungseinheiten (12a, 12b) zwei gesonderte Bilderfassungseinheiten (301a, 302a, 301b, 302b) zugeordnet sind, derart, dass jeweils zwei gesonderte Bilderfassungseinheiten (301a, 302a, 301b, 302b) eine im Wesentlichen gleiche Ausrichtung ihrer dritten optischen Achsen (OA3) aufweisen, wie die zweite optische Achse (OA2) der zugeordneten Panoramabilderfassungseinheit (12a, 12b).

10. Stereobilderfassungssystem nach einem der vorhergehenden Ansprüche wobei die Trägerstruktur (14, 22) durch mehrere strebenartige Trägerelemente (18, 22a) gebildet ist und dazu eingerichtet ist, die Panoramabilderfassungseinheiten (12a, 12b) auf einem beweglichen oder unbeweglichen Objekt zu befestigen.

11. Stereobilderfassungssystem nach Anspruch 10, wobei an der Trägerstruktur (14, 22) die gesonderten Bilderfassungseinheiten (301a, 302a, 301b, 302b) befestigbar oder befestigt sind.

12. Stereobilderfassungssystem nach einem der vorhergehenden Ansprüche, ferner umfassend wenigstens eine Computereinheit mit einer Anzeigeeinheit, die dazu eingerichtet sind, die Panoramabilderfassungseinheiten oder/und die gesonderten Bilderfassungseinheiten anzusteuern.

13. Stereobilderfassungssystem nach Anspruch 12, ferner umfassend:
wenigstens einen Empfänger, der dazu eingerichtet ist, Signale von Navigationssatelliten zu empfangen, eine Navigationsverarbeitungseinheit, die dazu eingerichtet ist, diese Signale zu verarbeiten, wobei die Navigationsverarbeitungseinheit Teil der Computereinheit ist, und
eine Inertialmesseinheit zur Richtungsbestimmung oder/und Orientierungsbestimmung,
so dass mittels der Navigationsdaten und der Daten der Inertialmesseinheit eine Position und Orientierung des Stereobilderfassungssystems bestimmt werden kann.

14. Fahrzeug, insbesondere Straßenfahrzeug oder Schienenfahrzeug, wobei am Fahrzeug (56) auf dem Fahrzeugdach oder auf einer mit dem Fahrzeug verbundenen Plattform ein Stereobilderfassungssystem (10) nach einem der vorhergehenden Ansprüche befestigt ist.

## Claims

1. A stereo image capturing system comprising two identical panorama image capturing units (12a, 12b), wherein each panorama image capturing unit (12a, 12b) comprises a number of first image capturing sensors including corresponding first optical elements (261a, 262a, 261b, 262b), wherein respective first imaging planes (241a, 242a, 241b, 242b) are determined by the first image sensors such that the first imaging planes (241a, 242a, 241b, 242b) are inclined relative to one another,
wherein the two panorama image capturing units (12a, 12b) are arranged at different end sections (16a, 16b) of a common support structure (14, 22), wherein the end sections (16a, 16b) and the panorama image capturing units (12a, 12b) are arranged on a substantially horizontally extending connection axis (VA),
**characterized in that**
each panorama image capturing unit (12a, 12b) comprises a second image capturing sensor including corresponding second optical elements (28a, 28b), wherein a second imaging plane (243a, 243b) is determined by the second image sensor, such that the second imaging plane (243a, 243b) is aligned orthogonally to all of the first imaging planes (241a, 242a, 241b, 242b) and that
the panorama image capturing units (12a, 12b) are aligned in such a manner that the two second imaging planes (243a, 243b) lie parallel to each other and such that it is possible to capture images of the surroundings from diametrically different directions by each of the second image capturing sensors using each of the second optical elements (28a, 28b),
wherein the panorama image capturing units (12a, 12b) are arranged along the connection axis (VA) in a first distance from each other that amounts to 0,8m to 1,5m.

2. The stereo image capturing system according to claim 1, wherein the panorama image capturing units (12a, 12b) are arranged at the support structure (14, 22) in such a manner that the two second imaging planes (243a, 243b) intersect the connection axis (VA) orthogonally.

3. The stereo image capturing system according to claim 2, wherein the panorama image capturing units (12a, 12b) are aligned relative to each other such that respective first imaging planes (241a, 242a, 241b, 242b) of the two panorama image capturing units (12a, 12b) are aligned equally in pairs with regard to a connection plane, which includes the connection axis (VA) and lies orthogonally to the second imaging plane (243a, 243b).

4. The stereo image capturing system according to any of the preceding claims, wherein the two panorama image capturing units (12a, 12b) each comprise four or more first image capturing sensors, wherein the four or more first imaging planes (241a, 242a, 241b, 242b) of each panorama image capturing unit (12a, 12b) are arranged along the sides of an in particular regular polygon lying orthogonally to the connection axis (VA).

5. The stereo image capturing system according to any of the preceding claims, wherein at each panorama image capturing unit (12a, 12b) respective first optical axes (OA1) of the first optical elements (261a, 262a, 261b, 262b) with regard to a hereto orthogonal second optical axis (OA2) of the second optical elements (28a, 28b) point in different radial directions, wherein two adjacent first optical axes (OA1) include an angle in the range from 30° to 90°.

6. The stereo image capturing system according to any of the preceding claims, wherein the connection axis (VA) includes the second optical axes (OA2) of the second optical elements (28a, 28b) of the two panorama image capturing units (12a, 12b).

7. The stereo image capturing system according to any of the preceding claims, further comprising at least two separate image capturing units (301a, 302a, 301b, 302b) including a respective third image capturing sensor and corresponding third optical elements (321a, 322a, 321b, 322b), wherein a respective third imaging plane is determined by the third image sensors.

8. The stereo image capturing system according to claim 7, wherein the third imaging planes of two image capturing units (301a, 302a, 301b, 302b) are aligned parallel to each other and wherein the image capturing units (301a, 302a, 301b, 302b) are arranged in a distance to each other extending orthogonally to the direction of the connection axis (VA) of the two panorama image capturing units (12a, 12b).

9. The stereo image capturing system according to claim 7 or 8, wherein two separate image capturing units (301a, 302a, 301b, 302b) are allocated to each of the two panorama image capturing units (12a, 12b) such that the two separate image capturing units (301a, 302a, 301b, 302b) each comprise a substantially equal alignment of their third optical axes (OA3) like the second optical axis (OA2) of the allocated panorama image capturing unit (12a, 12b).

10. The stereo image capturing system according to any of the preceding claims, wherein the support structure (14, 22) is formed by a number of strut-like support elements (18, 22a) and configured to attach the panorama image capturing units (12a, 12b) on a movable or an immovable object.

11. The stereo image capturing system according to claim 10, wherein the separate image capturing units (301a, 302a, 301b, 302b) are configured to be attached to or are attached at the support structure (14, 22).

12. The stereo image capturing system according to one of the preceding claims, further comprising at least one computer unit including a display unit which are configured to control the panorama image capturing units or/and the separate image capturing units.

13. The stereo image capturing system according to claim 12, further comprising:
at least one receiver configured to receive signals from navigation satellites, a navigation processing unit configured to process these signals, wherein the navigation processing unit is a part of the computer unit and
an inertial measuring unit for direction determination or/and orientation determination,
such that it is possible to determine a position and orientation of the stereo image capturing system by means of the navigation data and the data of the inertial measuring unit.

14. A vehicle, in particular a road vehicle or railway vehicle, wherein a stereo image capturing system (10) according to any of the preceding claims is attached at the vehicle (56) on the vehicle roof or on a platform connected with the vehicle.

## Revendications

1. Système de capture d'images stéréoscopiques avec deux unités de capture d'images panoramiques similaires (12a, 12b), dans lequel chaque unité de capture d'images panoramiques (12a, 12b) comprend plusieurs premiers capteurs de capture d'images avec de premiers éléments optiques associés (261a, 262a, 261b, 262b), dans lequel de premiers plans de représentation respectifs (241a, 242a, 241b, 242b) sont fixés par les premiers capteurs d'images de telle sorte que les premiers plans de représentation (241a, 242a, 241b, 242b) soient orientés en biais les uns par rapport aux autres, dans lequel les deux unités de capture d'images panoramiques (21a, 12b) sont disposées à différentes sections d'extrémité (16a, 16b) d'une structure porteuse commune (14, 22), dans lequel les sections d'extrémité (16a, 16b) et les unités de capture d'images panoramiques (12a, 12b) sont disposées sur un axe de liaison (VA) s'étendant sensiblement horizontalement,
**caractérisé en ce que** chaque unité de capture d'images panoramiques (12a, 12b) comprend un deuxième capteur de capture d'images avec de deuxièmes éléments optiques associés (28a, 28b), dans lequel un deuxième plan de représentation (243a, 243b) est fixé par le deuxième capteur d'images de telle sorte que le deuxième plan de représentation (243a, 243b) soit orienté orthogonalement à tous les premiers plans de représentation (241a, 242a, 241b, 242b), et que les unités de capture d'images panoramiques (12a, 12b) soient orientées pour que les deux deuxièmes plans de représentation (243a, 243b) soient parallèles l'un à l'autre et qu'à l'aide des deuxièmes éléments optiques respectifs (28a, 28b) des représentations d'environnement puissent être captées par le deuxième capteur de capture d'images respectif à partir de directions diamétralement différentes,
dans lequel les unités de capture d'images panoramiques (12a, 12b) sont disposées à une première distance l'une de l'autre, le long de l'axe de liaison (VA), qui est de 0,8 m à 1,5 m.

2. Système de capture d'images stéréoscopiques selon la revendication 1, dans lequel les unités de capture d'images panoramiques (12a, 12b) sont disposées sur la structure porteuse (14, 22) de sorte que les deux deuxièmes plans de représentation (243a, 243b) coupent orthogonalement l'axe de liaison (VA).

3. Système de capture d'images stéréoscopiques selon la revendication 2, dans lequel les unités de capture d'images panoramiques (12a, 12b) sont orientées l'une par rapport à l'autre de sorte que les premiers plans de représentation respectifs (241a, 242a, 241b, 242b) des deux unités de capture d'images panoramiques (12a, 12b) soient orientés de la même manière par paires par rapport à un plan de liaison qui contient l'axe de liaison (VA) et est orthogonal par rapport au deuxième plan de représentation (243a, 243b).

4. Système de capture d'images stéréoscopiques selon l'une des revendications précédentes, dans lequel les deux unités de capture d'images panoramiques (12a, 12b) comprennent respectivement quatre ou plus premiers capteurs de capture d'images, dans lequel les quatre ou plus premiers plans de représentation (241a, 242a, 241b, 242b) de chaque unité de capture d'images panoramiques (12a, 12b) sont disposés le long des côtés d'un polygone en particulier régulier qui est orthogonal à l'axe de liaison (VA).

5. Système de capture d'images stéréoscopiques selon l'une des revendications précédentes, dans lequel pour chaque unité de capture d'images panoramiques (12a, 12b), de premiers axes optiques respectifs (OA1) des premiers éléments optiques (261a, 262a, 261b, 262b) sont dirigés dans des directions radiales différentes par rapport à un deuxième axe optique (OA2), orthogonal à ceux-ci, du deuxième élément optique (28a, 28b), dans lequel de premiers axes optiques (OA1) voisins définissent un angle dans la plage de 30° à 90°.

6. Système de capture d'images stéréoscopiques selon l'une des revendications précédentes, dans lequel l'axe de liaison (VA) contient les deuxièmes axes optiques (OA2) des deuxièmes éléments optiques (28a, 28b) des deux unités de capture d'images panoramiques (12a, 12b).

7. Système de capture d'images stéréoscopiques selon l'une des revendications précédentes, comprenant au moins deux unités de capture d'images séparées (301a, 302a, 301b, 302b) avec un troisième capteur de capture d'images respectif et avec de troisièmes éléments optiques associés (321a, 322a, 321b, 322b), dans lequel un troisième plan de représentation respectif est fixé par les troisièmes capteurs d'images.

8. Système de capture d'images stéréoscopiques selon la revendication 7, dans lequel les troisièmes plans de représentation de deux unités de capture d'images (301a, 302a, 301b, 302b) sont orientés parallèlement l'un à l'autre, et dans lequel les unités de capture d'images (301a, 302a, 301b, 302b) sont disposées à une distance les unes des autres qui est orthogonale à la direction de l'axe de liaison (VA) des deux unités de capture d'images panoramiques (12a, 12b).

9. Système de capture d'images stéréoscopiques selon la revendication 7 ou 8, dans lequel à chacune des deux unités de capture d'images panoramiques (12a, 12b) sont associées deux unités de capture d'images séparées (301a, 302a, 301b, 302b), de telle sorte que deux unités de capture d'images séparées (301a, 302a, 301b, 302b) présentent respectivement une orientation de leurs troisièmes axes optiques (OA3) sensiblement identique à celle du deuxième axe optique (OA2) de l'unité de capture d'images panoramique (12a, 12) affectée.

10. Système de capture d'images stéréoscopiques selon l'une des revendications précédentes, dans lequel la structure porteuse (14, 22) est formée par plusieurs éléments porteurs en forme d'entretoises (18, 22a) et est installée de manière à fixer les unités de capture d'images panoramiques (12a, 12b) sur un objet mobile ou immobile.

11. Système de capture d'images stéréoscopiques selon la revendication 10, dans lequel les unités de capture d'images séparées (301a, 302a, 301b, 302b) sont fixables ou fixées à la structure porteuse (14, 22).

12. Système de capture d'images stéréoscopiques selon l'une des revendications précédentes, comprenant en outre au moins une unité informatique avec une unité d'affichage qui est installée pour commander les unités de capture d'images panoramiques ou/et les unités de capture d'images séparées.

13. Système de capture d'images stéréoscopiques selon la revendication 12, comprenant en outre :
au moins un récepteur qui est installé pour recevoir des signaux de satellites de navigation, une unité de traitement de navigation qui est installée pour traiter ces signaux, dans lequel l'unité de traitement de navigation fait partie de l'unité informatique, et
une unité de mesure inertielle pour une détermination de direction ou/et une détermination d'orientation,
de sorte qu'à l'aide des données de navigation et des données de l'unité de mesure inertielle une position et une orientation du système de capture d'images stéréoscopiques puissent être déterminées.

14. Véhicule, en particulier véhicule routier ou véhicule ferroviaire, dans lequel un système de capture d'images stéréoscopiques (10) selon l'une des revendications précédentes est fixé au véhicule (56) sur le toit du véhicule ou sur une plate-forme reliée au véhicule.
